# EUROPEAN PATENT APPLICATION

(11) **EP 2 874 403 A1**
(43) Date of publication of application: **20.05.2015**
(21) Application number: 13816872.9
(22) Date of filing: 02.07.2013
(51) Int. Cl.: H04N 21/435, H04N 21/235

(54) **RECEPTION DEVICE, INFORMATION PROCESSING METHOD, PROGRAM, TRANSMISSION DEVICE AND APPLICATION LINKING SYSTEM**

(30) Priority: 12.07.2012 US 201261670882 P
(71) Applicant: Sony Corporation, Tokyo 108-0075 (JP)
(72) Inventor: YAMAGISHI, Yasuaki, Tokyo 108-0075 (JP); NAKAMURA, Hitoshi, Tokyo 108-0075 (JP)
(74) Representative: Witte, Weller & Partner Patentanwälte mbB
(86) International application number: PCT/JP2013/068147
(87) International publication number: WO 2014/010469

(57) **Abstract**

The present disclosure relates to a reception device, a method of processing information, a program, a transmission device, and an application cooperation system, which enable an application suitable for a user to be executed in cooperation with progress of arbitrary content now being viewed.

The reception device of the present disclosure includes an extraction unit that extracts, from played back content, signature data that indicates a characteristic of the content, a profile generation unit that generates user profile data, a query generation unit that generates a query including at least the signature data and the user profile data, transmits the generated query to a transmission device, and receives a response matched with the user profile data in the transmission device, and returned from the transmission device according to the query, and an application execution unit that acquires and executes an application in cooperation with playback of the content based on the received response. The present disclosure can be applied to a TV receiver, and the like.

## Description

### TECHNICAL FIELD

The present disclosure relates to a reception device, a method of processing information, a program, a transmission device, and an application cooperation system, and especially relates to a reception device, a method of processing information, a program, a transmission device, and an application cooperation system, which are suitably used when an application program is executed in cooperation with playback of content, particularly such as a television program.

### BACKGROUND ART

For example, consider displaying information (performers, a story line, announcement of the next time, and the like) related to a television (TV) program (hereinafter, simply referred to as program) on the air, or information (news, weather forecast, traffic information, and the like) useful for viewers although not directly related to the program, to viewers of the program, on screens.

To realize the above display, a command for acquiring and starting a dedicated application program (hereinafter, described as application in short) may just be transmitted to TV receivers and the like in cooperation with progress of the program. In fact, already in Japan and Europe, the command or the application is transmitted using a band for data broadcasting in a TV broadcasting signal, whereby the above display is realized (for example, see Patent Document 1).

Meanwhile, in the United States, the band for data broadcasting is not provided in the TV broadcasting signal, and a method in place thereof has not been established. Therefore, execution of an application in cooperation with progress of a program has not been realized.

Note that, in the United States, there are a larger number of households who views programs through a CATV or an IPTV than households who directly receive TV broadcasting waves with the TV receivers and view the programs. In the CATV or the IPTV, only a video and an audio signal of the program may sometimes be extracted and distributed from the TV broadcasting signal, and thus if the band for data broadcasting is provided in the TV broadcasting signal in the United States, there is no guarantee that the data broadcasting signal including data related to an application is transmitted to reception devices.

Further, in recent years, not only when a program on the air is viewed, but also when a recorded and played back program, a video read from a package media such as a DVD or BD, or arbitrary content such as a moving image downloaded from the Internet is viewed, there are demands for execution of an application in cooperation with the program, the video, or the arbitrary content.

### CITATION LIST

### PATENT DOCUMENT

Patent Document 1: Japanese Patent Application Laid-Open No. 2006-50237

### SUMMARY OF THE INVENTION

### PROBLEMS TO BE SOLVED BY THE INVENTION

However, execution of an application in cooperation with arbitrary content is not apparently realized.

Further, it is desired not only to simply cause the application to be in cooperation with the content, but also to execute an application suitable for the user who views the content, and to present information suitable for the user in the executed application. However, a method that realizes the demands has not been established.

The present disclosure has been made in view of the foregoing, and enables an application suitable for a user to be executed in cooperation with progress of arbitrary content that is being viewed by the user.

### SOLUTIONS TO PROBLEMS

A reception device according to a first aspect of the present disclosure includes: an extraction unit configured to extract, from played back content, signature data indicating a characteristic of the content; a profile generation unit configured to generate user profile data; a query generation unit configured to generate a query including at least the signature data and the user profile data, to transmit the generated query to a transmission device, and to receive a response matched with the user profile data in the transmission device, and returned from the transmission device according to the query; and an application execution unit configured to acquire and execute an application in cooperation with playback of the content based on the received response.

The generation unit generates the user profile data including a demographic attribute of a user.

The query generation unit generates the query including at least the signature data and the user profile data, transmits the generated query to the transmission device, receives the response matched with the user profile data in the transmission device, and returned from the transmission device according to the query, every time the signature data is extracted in the extraction unit.

The profile generation unit further generates the user profile data including at least one of a specification of the reception device, a congestion state of a communication network, and natural environment information.

The reception device is built in a playback device that plays back content, and a content supply unit configured to supply all pieces of content to be played back by the playback device to the extraction unit is further included.

A method of processing information of a reception device according to the first aspect of the present disclosure includes the steps of: by the reception device, extracting, from played back content, signature data indicating a characteristic of the content; generating user profile data; generating a query including at least the signature data and the user profile data, transmitting the generated query to a transmission device, and receiving a response matched with the user profile data in the transmission device, and returned from the transmission device according to the query; and acquiring and executing an application in cooperation with playback of the content based on the received response.

A program according to the first aspect of the present disclosure causes a computer to function as: an extraction unit configured to extract, from played back content, signature data indicating a characteristic of the content; a profile generation unit configured to generate user profile data; a query generation unit configured to generate a query including at least the signature data and the user profile data, to transmit the generated query to a transmission device, and to receive a response matched with the user profile data in the transmission device, and returned from the transmission device according to the query; and an application execution unit configured to acquire and execute an application in cooperation with playback of the content based on the received response.

According to the first aspect of the present disclosure, from played back content, signature data that indicates a characteristic of the content is extracted, user profile data is generated, a query including at least the signature data and the user profile data is generated and transmitted to a transmission device, a response matched with the user profile data in the transmission device and returned from the transmission device according to the query is received. Then, an application is acquired and executed in cooperation with playback of the content based on the received response.

A transmission device according to a second aspect of the present disclosure includes: a database indicating a corresponding relationship among signature data indicating a characteristic of content extracted from the content, a content identifier indicating the content of an extraction source, and related metadata including an application identifier indicating an application to be executed in cooperation with the content; a response generation unit configured to identify content of an extraction source of signature data included in a query transmitted from a reception device by reference to the database, to generate a response including related metadata including the application identifier indicating an application to be executed in cooperation with the identified content, and to return the generated response to the reception device; and a matching unit configured to match the related metadata included in the response before a return with the user profile data included in the query.

The matching unit matches the related metadata included in the response before a return with a demographic attribute of a user of the reception device included in the user profile data.

According to the second aspect of the present disclosure, by reference to a database that indicates a corresponding relationship among signature data indicating a characteristic of content extracted from the content, a content identifier indicating the content of an extraction source, and related metadata including an application identifier indicating an application to be executed in cooperation with the content, content of an extraction source of signature data included in a query transmitted from a reception device is identified, a response including related metadata including the application identifier indicating an application to be executed in cooperation with the identified content is generated and returned to the reception device. Note that the related metadata included in the response before a return is matched with user profile data included in the query.

An application cooperation system according to a third aspect of the present disclosure made of a transmission device and a reception device of content, the system includes: the reception device including an extraction unit configured to extract, from played back content, signature data indicating a characteristic of the content; a profile generation unit configured to generate user profile data; a query generation unit configured to generate a query including at least the signature data and the user profile data, to transmit the generated query to a transmission device, and to receive a response matched with the user profile data in the transmission device, and returned from the transmission device according to the query; and an application execution unit configured to acquire and execute an application in cooperation with playback of the content based on the received response, and the transmission device including a database indicating a corresponding relationship among signature data indicating a characteristic of content extracted from the content, a content identifier indicating the content of an extraction source, and related metadata including an application identifier indicating an application to be executed in cooperation with the content; a response generation unit configured to identify content of an extraction source of signature data included in a query transmitted from a reception device by reference to the database, to generate a response including related metadata including the application identifier indicating an application to be executed in cooperation with the identified content, and to return the generated response to the reception device; and a matching unit configured to match the related metadata included in the response before a return with the user profile data included in the query.

According to the third aspect of the present disclosure, by a reception device, from played back content, signature data indicating a characteristic of the content is extracted, a query including at least the signature data and user profile data is generated and transmitted to a transmission device, a response matched with the user profile data in the transmission device, and returned from the transmission device according to the query is received, and an application is acquired and executed in cooperation with playback of the content based on the received response. Meanwhile, by the transmission device, by reference to a database that indicates a corresponding relationship among signature data indicating a characteristic of content extracted from the content, a content identifier indicating the content of an extraction source, and related metadata including an application identifier indicating an application to be executed in cooperation with the content, content of an extraction source of signature data included in a query transmitted from a reception device is identified, a response including related metadata including the application identifier indicating an application to be executed in cooperation with the identified content is generated and returned to the reception device. Note that the related metadata included in the response before a return is matched with the user profile data included in the query.

### EFFECTS OF THE INVENTION

According to the first aspect of the present disclosure, an application suitable for the user can be executed in cooperation with progress of content being viewed.

According to the second aspect of the present disclosure, content now being viewed is identified by a reception device, and an application suitable for the user can be supplied in cooperation with progress of the content.

According to the third aspect of the present disclosure, content now being viewed is identified by a reception device, and an application suitable for the user can be supplied from a broadcasting device to the reception device in cooperation with progress of the content.

### BRIEF DESCRIPTION OF DRAWINGS

Fig. 1 is a block diagram illustrating a configuration example of an application cooperation system that is an embodiment of the present disclosure.
Fig. 2 is a block diagram illustrating a configuration example of an ACR server.
Fig. 3 is a diagram illustrating a data structure of ACR reference data.
Fig. 4 is a diagram illustrating a data structure of an ACR query.
Figs. 5A and 5B are diagrams illustrating data structures of an ACR response.
Fig. 6 is a flowchart for describing an operation of an application cooperation system.
Fig. 7 is a block diagram illustrating a configuration example of a computer.

### MODE FOR CARRYING OUT THE INVENTION

Hereinafter, favorable embodiments (hereinafter, referred to embodiments) for implementing the present disclosure will be described in detail with reference to the drawings.

### [Configuration Example of Application Cooperation System]

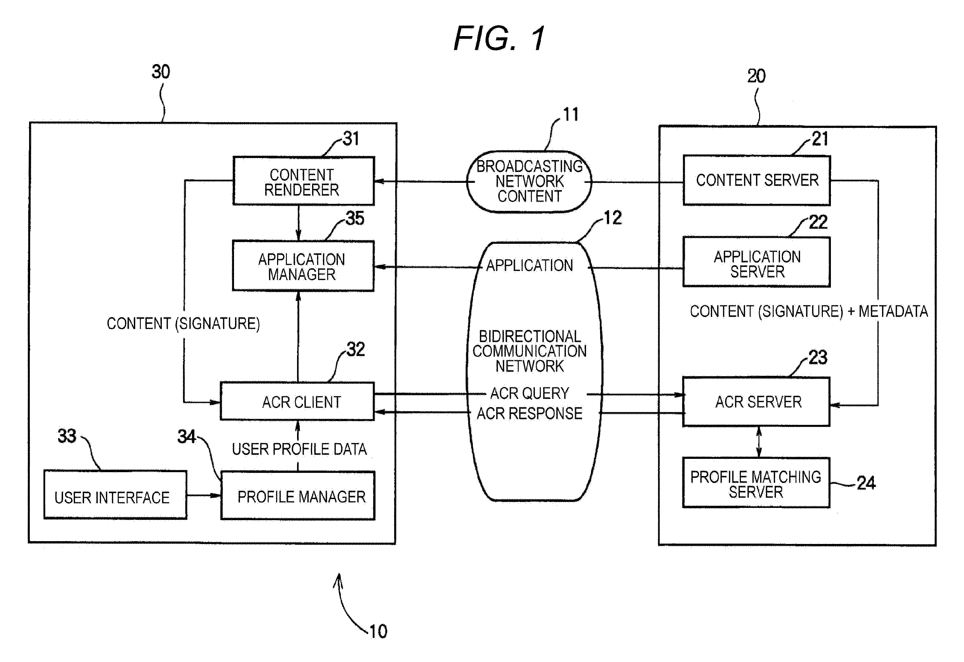

Fig. 1 illustrates a configuration example of an application cooperation system as an embodiment of the present disclosure.

This application cooperation system 10 identifies content viewed by a user using a screen of a TV receiver as a monitor, executes an application suitable for the user in cooperation with progress of the content, and presents information suitable for the user with the application now being executed.

Here, the content is not limited to a program now on the air, which is received by the TV receiver. For example, all kinds of AV content, such as a program recorded and played back by a video recorder, a video such as a movie played back from a package medium by a multimedia player, and a moving image downloaded through the Internet, are included. Further, a commercial message (hereinafter, referred to CM) inserted between programs or in the middle of a program is also included in the content.

For identification of the content, automatic content recognition (ACR) that identifies the content by comparing signature data (a feature amount) periodically extracted from the content now being viewed, and signature data of content registered in a database in advance, is used.

The application cooperation system 10 is configured from a transmission device 20, and a plurality of reception devices 30 connected with the transmission device 20 through a broadcasting network 11 and a bidirectional communication network 12. The broadcasting network 11 indicates a TV broadcasting network, a CATV network, an IPTV network, and the like. The bidirectional communication network 12 indicates an IP communication network represented by the Internet.

Each of the reception devices 30 is arranged in a user house in a state of being built in a TV receiver or the like.

### [Description of Transmission Device 20]

The transmission device 20 is configured from a content server 21, an application server 22, an ACR server 23, and a profile matching server 24.

The content server 21 broadcasts content such as a program or a CM through the broadcasting network 11. Further, the content server 21 supplies broadcasted content and corresponding metadata to the ACR server 23. The metadata includes an identifier that indicates an application to be executed in cooperation with progress of the content, an acquisition destination thereof, data to be used in the application, and the like. Note that the signature data that indicates characteristics of the content may be supplied to the ACR server 23, instead of supplying the content.

The application server 22 supplies the application and the data to be used in the application through the bidirectional communication network 12 in response to a request from the reception device 30.

The ACR server 23 holds, in a database, ACR reference data in which the signature data, which is extracted from each of various types of content that can be viewed at the reception device 30 side, at a predetermined sampling period, is associated with a content identifier, an application identifier, and the like. The ACR server 23 generates and returns an ACR response in response to an ACR query transmitted from the reception device 30 based on the database of the ACR reference data.

The profile matching server 24 performs matching and filtering of related metadata to be stored in the ACR response based on user profile data of the reception device 30 included in the ACR query when the ACR server 23 generates the ACR response according to the ACR query.

Note that the content server 21, the application server 22, the ACR server 23, and the profile matching server 24 that configure the transmission device 30 may be centrally arranged in one place, or may be arranged in a distributed manner. Further, the content server 21, the application server 22, the ACR server 23, and the profile matching server 24 may be appropriately combined. Further, a plurality of the ACR servers 23 and the profile matching servers 24 may exist.

### [Description of Reception Device 30]

The reception device 30 includes a content renderer 31, an ACR client 32, a user interface 33, a profile manager 34, and an application manager 35.

The content renderer 31 acquires and branches all pieces of content displayed on a display of the TV receiver where the reception device 30 is built in, and supplies the content to the ACR client 32. That is, the content renderer 31 acquires and branches not only the content broadcasted from the content server 21 but also content input through various input terminals (HDMI (registered trademark) terminal, and the like) of the TV receiver, and supplies the content to the ACR client 32.

The ACR client 32 extracts, at a predetermined sampling period, the signature data that indicates characteristics of the content from the content input from the renderer 31. Here, as a method of extracting the signature data, an extraction method of the ACR server 23 of the transmission device 20 (described below) is used.

Further, the ACR client 32 generates the ACR query that includes the extracted signature data and user profile data, and transmits the ACR query to the ACR server 23 of the transmission device 20 through the bidirectional communication network 12. Further, the ACR client 32 receives and holds the ACR response returned from the ACR server 23 according to the transmitted ACR query. Further, the ACR client 32 analyzes the held ACR response, and causes the application manager 35 to execute an application corresponding to the content now being viewed in cooperation with progress of the content.

The user interface 33 receives an input operation of profile data of the user himself/herself, a selection operation of content to be played back, an operation to the executed application, and the like.

The profile manager 34 generates the user profile data based on information input using the user interface 33, an operation history, and the like, and outputs the user profile data to the ACR client 32.

The generated user profile data can include items, such as a demographic attribute of the user (the age, gender, occupation, academic background, residential area, mail address, hobby, preference, language, family size, and viewing tendency of content), a specification of the reception device 30 (a type of available CODEC and the like), a congestion state of the bidirectional communication network 12, natural environment information (weather, temperature, humidity, and the like).

The application manager 35 acquires the application corresponding to the content now being viewed from the application server 22 through the bidirectional communication network 12 and executes the application, according to control from the ACR client 32. The application executed in the application manager 35 acquires related metadata corresponding to the application now being executed from the ACR client 32 using a related metadata acquisition application program interface (API).

### [Detailed Configuration Example of ACR Server 23]

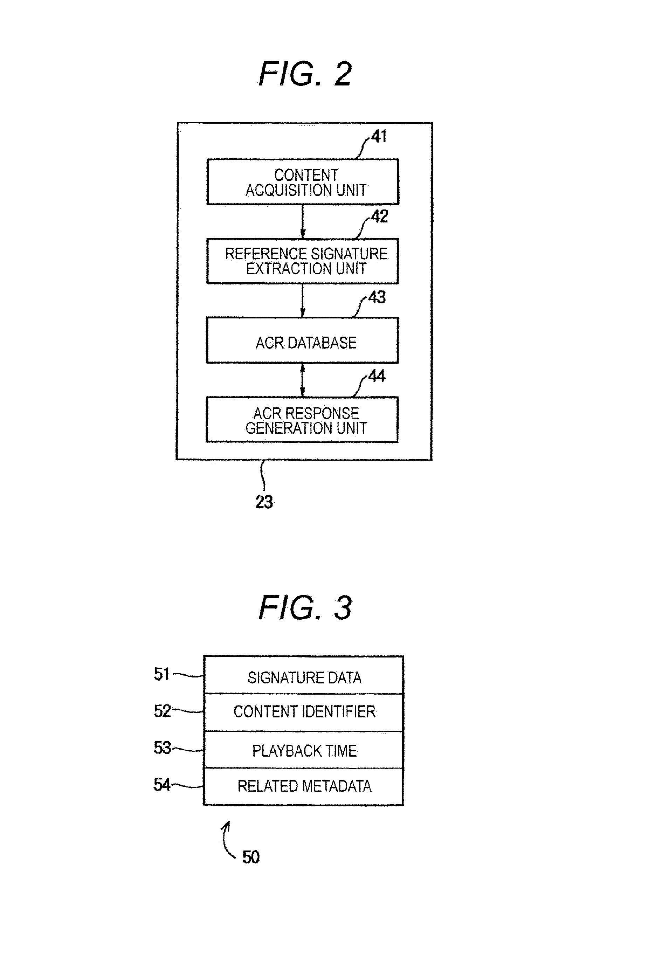

Fig. 2 illustrates a detailed configuration example of the ACR server 23.

The ACR server 23 is configured from a content acquisition unit 41, a reference signature extraction unit 42, an ACR database 43, and an ACR response generation unit 44.

The content acquisition unit 41 acquires, from the content server 21, the content that is scheduled to broadcast and metadata of the content by the content server 21 through the broadcasting network 11, and supplies the acquired content to the reference signature extraction unit 42. Further, the content acquisition unit 41 acquires various pieces of content that can be viewed at the reception device 30 side and metadata of the content from an outside, and supplies the acquired content to the reference signature extraction unit 42.

The reference signature extraction unit 42 extracts, at a predetermined sampling period using a predetermined extraction method, the signature data that indicates characteristics of the content from the content supplied from the content acquisition unit 41, and outputs the extracted signature data to the ACR database 43. As the extraction method of the signature data, an existing arbitrary method can be applied. For example, a watermark embedded in the content in advance may be extracted and employed as the signature data. A finger print may be calculated and employed as the signature data.

By use of the finger print as the signature data, even if a resolution, an aspect ratio, a bit rate, and an encoding format of the content are converted, the same signature data can be obtained before and after the conversion. Therefore, identification accuracy of when identification of the content is performed based on the signature data can be increased.

Note that, when there is a plurality of the ACR servers 23, the extraction methods of the signature data in the reference signature extraction units 42 are not necessarily unified. An arbitrary extraction method can be employed in each of the ACR servers 23.

The ACR database 43 generates and stores the ACR reference data in which each signature data input from the reference signature extraction unit 42 is associated with the content identifier that indicates the content of an extraction source of the signature data, and the like. Accordingly, the signature data extracted from the content is stored in the database. A data structure of the ACR reference data will be described below with reference to Fig. 3.

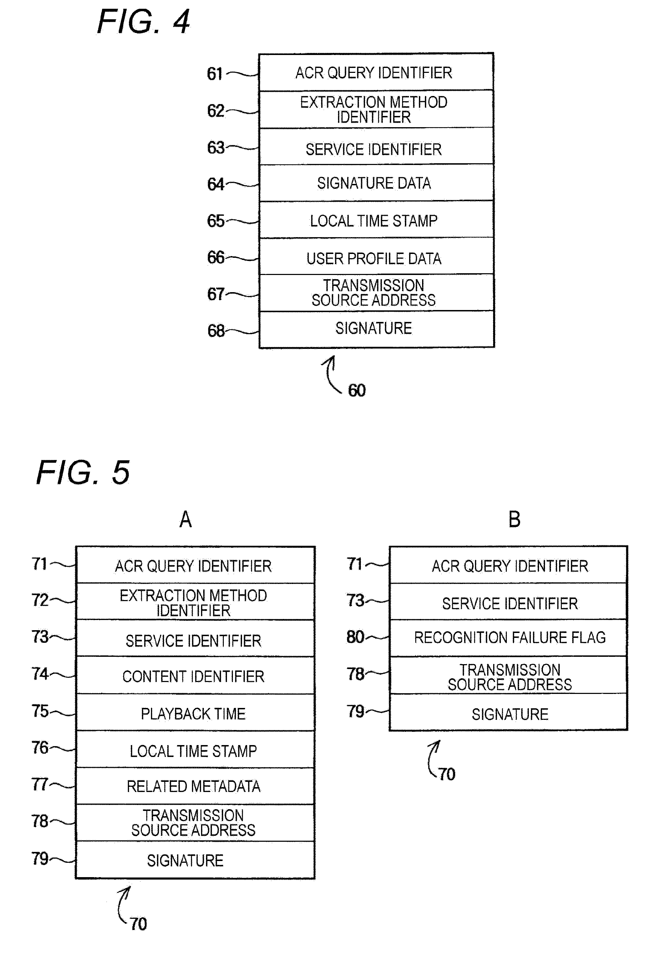

The ACR response generation unit 44 identifies the content of the extraction source of the signature data included in the ACR query transmitted from the ACR client 32 by reference to the ACR database 43. Further, the ACR response generation unit 44 generates the ACR response that includes the content identifier, the related metadata, and the like as an identification result. Further, the ACR response generation unit 44 performs matching and filtering of the related metadata stored in the ACR response, according to the control of the profile matching server 24, and transmits a result to the reception device 30. A data structure of the ACR response will be described below with reference to Figs. 5A and 5B.

### [Data Structure of ACR Reference Data]

Fig. 3 illustrates a data structure of the ACR reference data stored in the ACR database 43 of the ACR server 23.

In ACR reference data 50, a content identifier 52, a playback time 53, and related metadata 54 are associated with signature data 51.

The signature data 51 is extracted from the content in the reference signature extraction unit 42. The content identifier 52 is information for identifying the content of the extraction source of the signature data 51. The playback time 53 indicates progress timing of the content of when the signature data 51 is extracted from the content indicated by the content identifier 52, and is expressed by an elapsed time from a head of the content.

The related metadata 54 includes an application identifier that indicates an application to be executed in cooperation with the progress timing of content, the progress timing being indicated by a playback time 83, and the content being indicated by a content identifier 82, information that indicates an acquisition destination (the application server 22) of the application identifier, various data to be used by the executed application.

Note that the related metadata 54 may have different content according to the progress timing of content indicated by the playback time 53.

### [Data Structure of ACR Query]

Fig. 4 illustrates a data structure of the ACR query generated in the ACR client 32.

An ACR query 60 includes an ACR query identifier 61, an extraction method identifier 62, a service identifier 63, signature data 64, a local time stamp 65, user profile data 66, a transmission source address 67, and a signature 68.

The ACR query identifier 61 is information for uniquely identifying the ACR query 60. The extraction method identifier 62 is information for identifying the extraction method used when the signature data 64 is extracted. The service identifier 63 is information for selecting the ACR server 23, to which the ACR query 60 is transmitted and from which the ACR response is obtained, when there is a plurality of the ACR servers 23.

The signature data 64 is extracted from the content in the ACR client 32. The local time stamp 65 indicates timing at which the signature data 64 is extracted from the content, and is expressed by a time indicated by a local system clock of the reception device 30.

The user profile data 66 is generated in the profile manager 34. The transmission source address 67 is an address in the bidirectional communication network 12 of the ACR client 32 that transmits the ACR query 60, and is used as information that indicates a return destination of the ACR response generated in the ACR server 23 according to the ACR query 60. The signature 68 suppresses falsification of the ACR query 60. Note that the entire ACR query 60 may be encrypted and transmitted.

### [Data Structure of ACR Response]

Figs. 5A and 5B illustrate data structures of the ACR response generated in the ACR response generation unit 44 of the ACR server 23.

Note that Fig. 5A illustrates a data structure of the ACR response of when the content of the extraction source of the signature data 64 included in the ACR query 60 has been able to be identified, that is, when the content now being viewed has been able to be identified in the reception device 30. Fig. 5B illustrates a data structure of the ACR response of when the content has not been able to be identified.

An ACR response 70 (Fig. 5A) of when the content now being viewed has been able to be identified in the reception device 30 includes an ACR query identifier 71, an extraction method identifier 72, a service identifier 73, a content identifier 74, a playback time 75, a local time stamp 76, related metadata 77, an transmission source address 78, and a signature 79.

Meanwhile, the ACR response 70 (Fig. 5B) of when the content now being viewed has not been able to be identified in the reception device 30 includes the ACR query identifier 71, the service identifier 73, the transmission source address 78, the signature 79, and an identification failure flag 80.

The ACR query identifier 71, the extraction method identifier 72, the service identifier 73, and the local time stamp 76 are used for identifying the ACR query 60 that is a trigger with which the ACR response 70 is generated, and are described citing the ACR query identifier 61, the extraction method identifier 62, the service identifier 63, and the local time stamp 65 of the corresponding ACR query 60.

The content identifier 74, playback time 75, and the related metadata 77 indicate an identification result, and are described citing the content identifier 52, the playback time 53, and the related metadata 54 of the corresponding ACR reference data 50.

The transmission source address 78 is an address on the bidirectional communication network 12, of the ACR server 23 that transmits the ACR response 70. The signature 79 suppresses falsification of the ACR response 70. Note that the falsification may be prevented by encrypting and transmitting of the entire ACR response 70.

The identification failure flag 80 is a flag that indicates the content of the extraction source of the signature data 64 included in the ACR query 60 from the ACR client 32 has not been able to be identified in the ACR server 23, that is, the content now being viewed has not been able to be identified in the reception device 30.

### [Operation by Application Cooperation System 10]

Next, an operation of the application cooperation system 10 will be described.

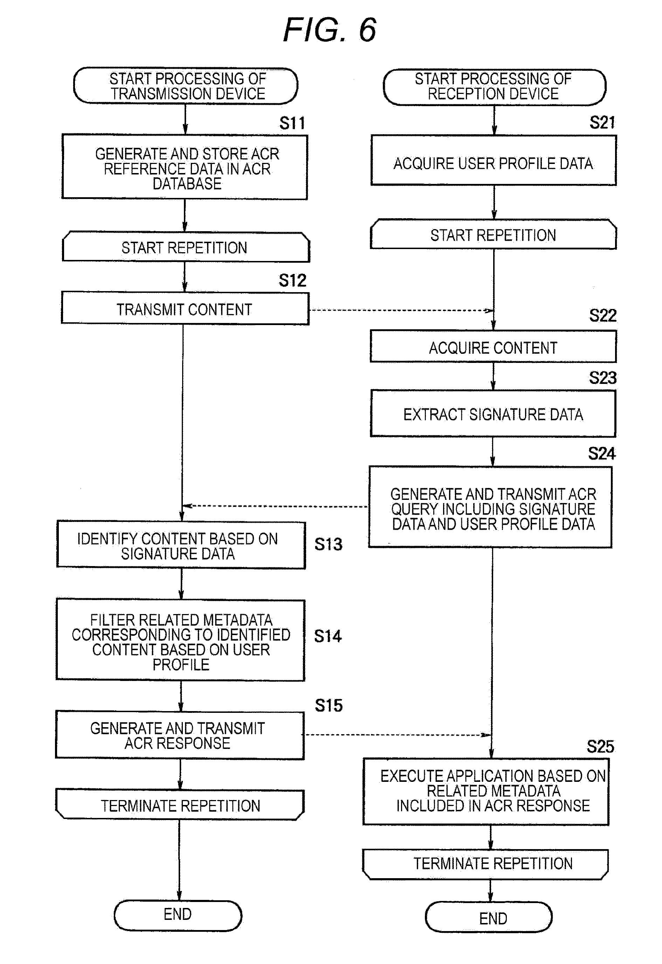

Fig. 6 is a flowchart for describing an operation of the application cooperation system 10.

In step S11, the transmission device 20 supplies the content to be subsequently transmitted and the relate metadata thereof to the ACR server 23, as preprocessing of starting transmission of the content through the broadcasting network 11. The ACR server 23 generates the ACR reference data using the supplied content and the related metadata, and registers the ACR reference data in the ACR database.

As described above, after the ACR reference data corresponding to the content to be broadcasted is stored in the database, steps S12 to S15 described below are repeated.

In step S12, the transmission device 20 starts transmission of the content through the broadcasting network 11.

Meanwhile, in the reception device 30, the profile manager 34 generates the user profile data and supplies the user profile data to the ACR client 32 as preprocessing of receiving and playing back of the content. Note that, among the items included in the user profile data, items that are dynamically changed, such as the congestion state of the bidirectional communication network 12 and the natural environment information, are subsequently updated, as needed.

In the reception device 30, while the content is played back and viewed, steps S22 to S25 described below are repeated. Note that the content may not be the content transmitted by the content server 12.

In step S22, the content renderer 31 acquires and branches the content now being viewed, and outputs the content to the ACR client 32. In step S23, the ACR client 32 extracts, at a predetermined sampling period, the signature data from the content now being viewed input from the content renderer 31.

In step S24, the ACR client 32 generates the ACR query 60 including the signature data and the user profile data, and transmits the ACR query 60 to the ACR server 23, every time extracting the signature data.

In step S13, in the ACR server 23 that has received the ACR query 60 from the ACR client 32, the ACR response generation unit 44 refers to the ACR database 43, and identifies the content corresponding to the signature data 64 included in the received ACR query 60.

In step S14, the ACR response generation unit 44 generates the ACR response 70 according to an identification result of the content. At this time, the ACR response generation unit 44 performs matching and filtering of the related metadata 77 to be included in the ACR response 70 based on the user profile data 66 included in the ACR query 60. In step S15, the ACR response generation unit 44 transmits the generated ACR response 70 to the ACR client 32.

In step S25, the ACR client 32 that has received the ACR response 70 from the ACR server 23 analyzes the related metadata 77 included in the ACR response 70, and cause the application manager 35 to acquire and execute the application to be executed in cooperation with the content now being viewed.

Note that the related metadata 77 included in the received ACR response 70 has already been subjected to the matching and filtering in the ACR server 23 based on the user profile data. However, the matching and filtering may be further performed in the ACR client 32 based on the user profile data.

The application manager 35 acquires and executes the application from the application server 22. The application executed in the application manager 35 acquires the related metadata 77 from the ACR response 70 held by the ACR client 32 using the related metadata acquisition API.

The processing from steps S12 to S15 and from steps S22 to S25 described above is repeatedly executed while the content is viewed. Accordingly, the operation of the application suitable for the user and in cooperation with the progress of the content now being viewed becomes possible.

To be specific, for example, when there is a scene of feeding a pet as details of certain content, if it is revealed that the user of the reception device 30 has a cat according to the user profile data, link information such as a commercial banner of a pet food for cat, a purchase site, and the like can be displayed in the scene with an application to be executed in cooperation with the content.

Further, for example, when it has been revealed that the language of the user of the reception device 30 is Spanish according to the user profile data, and when the content such as a program or a CM is being viewed with a language other than Spanish, a Spanish subtitle can be displayed or a Spanish commentary can be output with an application to be executed in cooperation with the content.

Further, for example, when a viewing region of the user of the reception device 30 has been revealed according to the user profile data, information specific to the viewing region can be presented to the user with an application to be executed in cooperation with the content.

Note that the above-described specific examples can be executed by existing technologies. However, to actually execute the examples, a plurality of times of transactions is required between the reception side and the transmission side for narrowing down the information to be presented to the user, and the information required by the user cannot be promptly presented.

However, in the present embodiment, the user profile data 66 is transmitted by being included in the ACR query 60 for requesting identification of the content. Therefore, the matching and filtering can be performed so that the related metadata 77 becomes suitable for the user of the reception device 70, at the stage where the ACR response 70 is generated. Therefore, the information suitable for the user can be promptly presented to the user.

Incidentally, each of the transmission device 20 and the reception device 30 that execute the above-described series of processing can not only be configured from hardware but also realized by execution of software by a computer. The computer includes a computer incorporated in dedicated hardware, a general-purpose computer capable of executing various functions by being installed various programs, and the like.

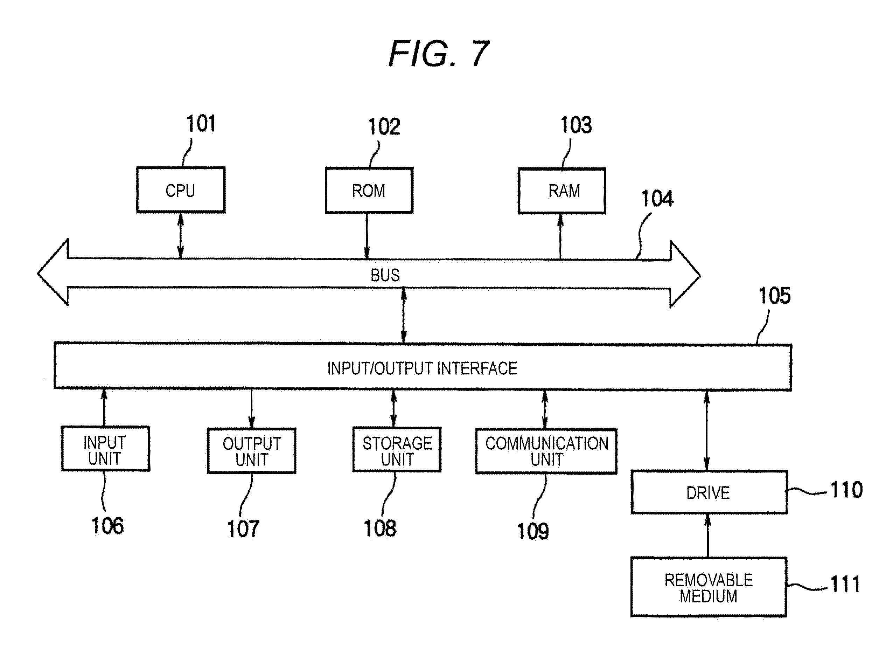

Fig. 7 is a block diagram illustrating a configuration example of hardware of the above-described computer.

In a computer 100, a central processing unit (CPU) 101, a read only memory (ROM) 102, and a random access memory (RAM) 103 are mutually connected by a bus 104.

An input/output interface 105 is connected to the bus 104. An input unit 106, an output unit 107, a storage unit 108, a communication unit 109, and a drive 110 are connected to the input/output interface 105.

The input unit 106 is made of a key board, a mouse, a microphone, and the like. The output unit 107 is made of a display, a speaker, and the like. The storage unit 108 is made of a hard disk, a non-volatile memory, and the like. The communication unit 109 is made of a network interface, and the like. The drive 110 drives a removable medium 111 such as a magnetic disk, an optical disk, a magneto-optical disk, or a semiconductor memory.

In the computer 100 configured as described above, the CPU 101 loads the program stored in the storage unit 108 through the input/output interface 105 and the bus 104 to the RAM 103, and executes the program, thereby to perform the above-described series of processing.

The program executed by the computer 100 (CPU 101) can be recorded on the removable medium 111 as a package medium and can be provided. Further, the program can be provided through a wired or wireless transmission medium, such as local area network, the Internet or digital satellite broadcasting.

In the computer 100, the program can be installed to the storage unit 108 through the input/output interface 105 by mounting the removable medium 211 to the drive 210. Further, the program can be received by the communication unit 109 and installed to the storage unit 108 through a wired or wireless transmission medium. Alternatively, the program can be installed in the ROM 102 or the storage unit 108 in advance.

Note that the program executed by the computer 100 may be a program, processing of which is performed in time series along the order described in this specification, or may be a program, processing of which is performed in parallel or at necessary timing such as when called.

Note that an embodiment of the present disclosure is not limited to the above-described embodiments, and various changes can be made without departing from the gist of the present disclosure.

### REFERENCE SIGNS LIST

- 10: Application cooperation system
- 11: Broadcasting network
- 12: Bidirectional communication network
- 20: Transmission device
- 21: Content server
- 22: Application server
- 23: ACR server
- 24: Profile matching server
- 30: Reception device
- 31: Content renderer
- 32: ACR client
- 33: User interface
- 34: Profile manager
- 35: Application manager
- 41: Content acquisition unit
- 42: Reference data extraction unit
- 43: ACR database
- 44: ACR response generation unit
- 50: ACR reference data
- 60: ACR query
- 66: User profile data
- 70: ACR response
- 100: Computer
- 101: CPU

## Claims

1. A reception device comprising:
an extraction unit configured to extract, from played back content, signature data indicating a characteristic of the content;
a profile generation unit configured to generate user profile data;
a query generation unit configured to generate a query including at least the signature data and the user profile data, to transmit the generated query to a transmission device, and to receive a response matched with the user profile data in the transmission device, and returned from the transmission device according to the query; and
an application execution unit configured to acquire and execute an application in cooperation with playback of the content based on the received response.

2. The reception device according to claim 1, wherein the generation unit generates the user profile data including a demographic attribute of a user.

3. The reception device according to claim 2, wherein the query generation unit generates the query including at least the signature data and the user profile data, transmits the generated query to the transmission device, receives the response matched with the user profile data in the transmission device, and returned from the transmission device according to the query, every time the signature data is extracted in the extraction unit.

4. The reception device according to claim 2, wherein the profile generation unit further generates the user profile data including at least one of a specification of the reception device, a congestion state of a communication network, and natural environment information.

5. The reception device according to claim 2, wherein the reception device is built in a playback device that plays back content, and
a content supply unit configured to supply all pieces of content to be played back by the playback device to the extraction unit is further included.

6. A method of processing information of a reception device, comprising the steps of:
by the reception device,
extracting, from played back content, signature data indicating a characteristic of the content;
generating user profile data;
generating a query including at least the signature data and the user profile data, transmitting the generated query to a transmission device, and receiving a response matched with the user profile data in the transmission device, and returned from the transmission device according to the query; and
acquiring and executing an application in cooperation with playback of the content based on the received response.

7. A program for causing a computer to function as:
an extraction unit configured to extract, from played back content, signature data indicating a characteristic of the content;
a profile generation unit configured to generate user profile data;
a query generation unit configured to generate a query including at least the signature data and the user profile data, to transmit the generated query to a transmission device, and to receive a response matched with the user profile data in the transmission device, and returned from the transmission device according to the query; and
an application execution unit configured to acquire and execute an application in cooperation with playback of the content based on the received response.

8. A transmission device comprising:
a database indicating a corresponding relationship among signature data indicating a characteristic of content extracted from the content, a content identifier indicating the content of an extraction source, and related metadata including an application identifier indicating an application to be executed in cooperation with the content;
a response generation unit configured to identify content of an extraction source of signature data included in a query transmitted from a reception device by reference to the database, to generate a response including related metadata including the application identifier indicating an application to be executed in cooperation with the identified content, and to return the generated response to the reception device; and
a matching unit configured to match the related metadata included in the response before a return with the user profile data included in the query.

9. The transmission device according to claim 8, wherein the matching unit matches the related metadata included in the response before a return with a demographic attribute of a user of the reception device included in the user profile data.

10. An application cooperation system made of a transmission device and a reception device of content, the system comprising:
the reception device including
an extraction unit configured to extract, from played back content, signature data indicating a characteristic of the content;
a profile generation unit configured to generate user profile data;
a query generation unit configured to generate a query including at least the signature data and the user profile data, to transmit the generated query to a transmission device, and to receive a response matched with the user profile data in the transmission device, and returned from the transmission device according to the query; and
an application execution unit configured to acquire and execute an application in cooperation with playback of the content based on the received response, and
the transmission device including
a database indicating a corresponding relationship among signature data indicating a characteristic of content extracted from the content, a content identifier indicating the content of an extraction source, and related metadata including an application identifier indicating an application to be executed in cooperation with the content;
a response generation unit configured to identify content of an extraction source of signature data included in a query transmitted from a reception device by reference to the database, to generate a response including related metadata including the application identifier indicating an application to be executed in cooperation with the identified content, and to return the generated response to the reception device; and
a matching unit configured to match the related metadata included in the response before a return with the user profile data included in the query.
